# EUROPÄISCHE PATENTANMELDUNG

(11) **EP 1 054 043 A2**
(43) Veröffentlichungstag der Anmeldung: **22.11.2000**
(21) Anmeldenummer: 00110337.3
(22) Anmeldetag: 13.05.2000
(51) Int. Cl.: C09B 67/22

(54) **Orange- und scharlachfarbige Mischungen von Reaktivfarbstoffen**

(30) Priorität: 19.05.1999 DE 19922826
(71) Anmelder: DyStar Textilfarben GmbH & Co. Deutschland KG, 60318 Frankfurt am Main (DE)
(72) Erfinder: Russ, Werner, Dr., 65439 Flörsheim-Wicker (DE); Ehrenberg, Stefan, Dr., 60528 Frankfurt am Main (DE); Schumacher, Christian, Dr., 65779 Kelkheim (DE); Gröbel, Bengt-Thomas, Dr., 65529 Niederems (DE); Röhrig, Dierk, 12040 Jakarta (ID); Krieger, Karl, 65510 Hünstetten (DE); Vesala, Matti, Krakatau Industrial Estate Cilegon, 42435 Cilegon (ID)

(57) **Zusammenfassung**

Die vorliegende Erfindung betrifft eine Farbstoffmischung enthaltend einen oder mehrere der Farbstoffe der allgemeinen Formel (I) 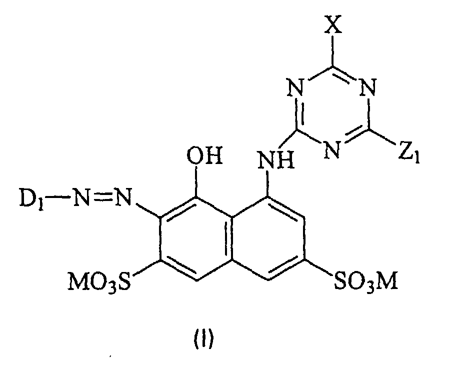 und einen oder mehrere Farbstoffe der allgemeinen Formeln (2a), (2b) und (2c) 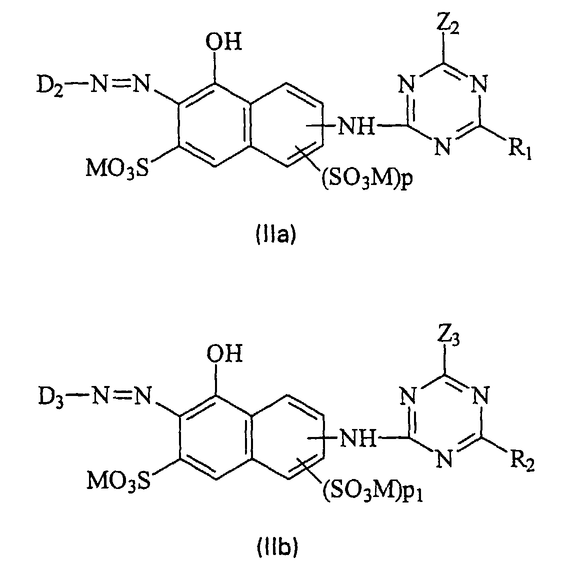 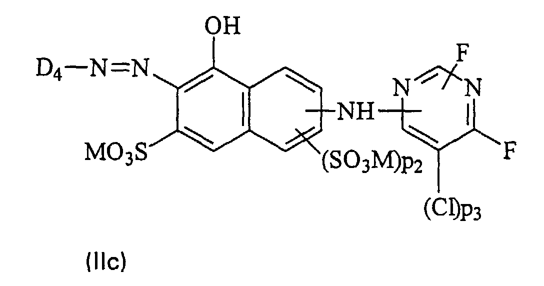 worin
D₁ und D₂ unabhängig voneinander für eine Gruppe der allgemeinen Formeln (1a), (1b), (1c) oder (1d) stehen 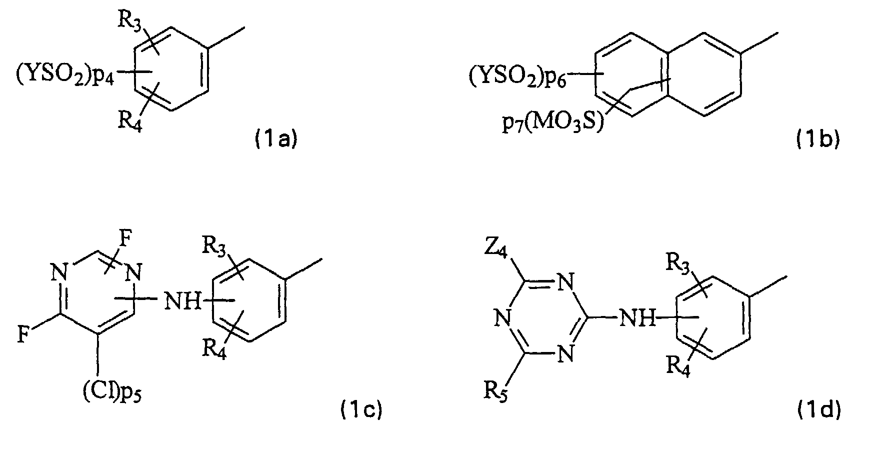 und die variablen Substituenten wie in Anspruch 1 angegeben definiert sind, Verfahren zu ihrer Herstellung und ihre Verwendung zum Färben von hydroxy- und/oder carbonamidgruppenhaltigem Fasermaterial.

## Beschreibung

Die vorliegende Erfindung liegt auf dem technischen Gebiet der faserreaktiven Farbstoffe.

Aus der EP-A 681007 sind bereits Reaktivfarbstoffmischungen bekannt, die hydroxy- und/oder carbonamidgruppenhaltige Fasermaterialien in brillanten orangen bis roten Tönen zu färben vermögen. Allerdings weisen diese Mischungen anwendungstechnische Mängel auf, wobei die sogenannte Scheuerstellenmarkierung besonders zu erwähnen ist.

Mit der vorliegenden Erfindung werden nun Reaktivfarbstoffmischungen zur Verfügung gestellt, die im Vergleich zu den Mischungen des Standes der Technik verbesserte Eigenschaften aufweisen.

Die vorliegende Erfindung betrifft eine Farbstoffmischung enthaltend einen oder mehrere der Farbstoffe der allgemeinen Formel (I) 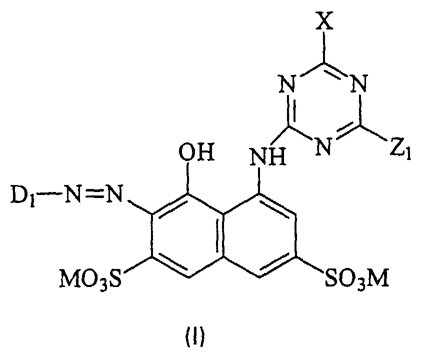 und einen oder mehrere Farbstoffe der allgemeinen Formeln (IIa), (IIb) und (IIc) 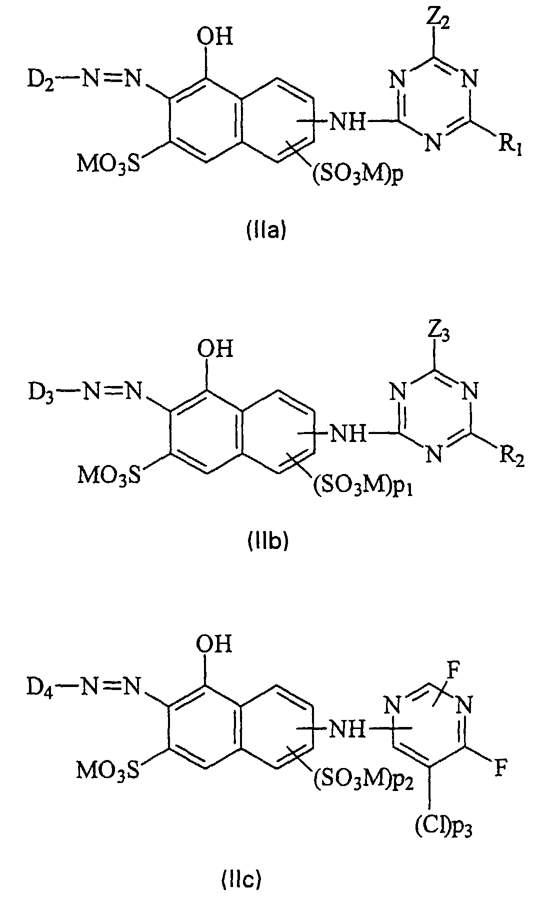 worin
D₁ und D₂ unabhängig voneinander für eine Gruppe der allgemeinen Formeln (1a), (1b), (1c) oder (1d) stehen 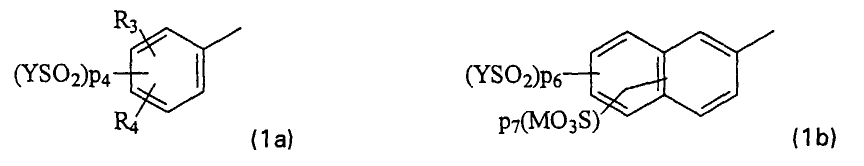 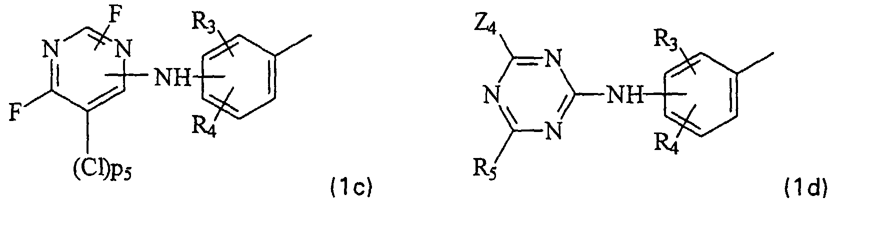 in welchen
   - R³: Wasserstoff, Methyl, Ethyl, Methoxy, Ethoxy, Sulfo oder Carboxy;
   - R⁴: Wasserstoff, Methyl, Ethyl, Methoxy, Ethoxy oder Sulfo;
   - R⁵: Hydroxy, Phenoxy, Morpholino, eine Gruppe der allgemeinen Formel (2a) 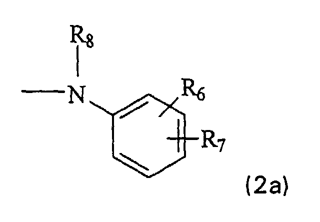 worin
   R⁶ Wasserstoff, Methyl, Ethyl, Methoxy, Ethoxy, Hydroxy, Sulfo, Carboxy oder eine Gruppe -(CH₂)ₐ-SO₂-Y, worin a= 0, 1, 2 oder 3 und Y wie unten angegeben definiert ist;
   R⁷ Wasserstoff, Methyl, Ethyl, Methoxy, Ethoxy oder Sulfo und
   R⁸ Wasserstoff, Methyl, Ethyl oder β-Sulfoethyl sind; oder eine Gruppe der allgemeinen Formel (2b) oder (2c)

      -N(R₉)-(CH₂)_{b}-SO₂-Y (2b)

      -N(R₉)-(CH₂)_{b}-W-(CH₂)_{c}-SO₂-Y (2c)

      worin
   R₉ Wasserstoff, Phenyl, durch 1 oder 2 Substituenten aus der Reihe Methyl, Ethyl, Methoxy, Ethoxy, Sulfo oder Carboxy substituiertes Phenyl, (C₁-C₄)-Alkyl oder eine Gruppe der Formel

      -(CH₂)_{b}-W-(CH₂)_{c}-SO₂-Y;
   b 0, 1, 2 oder 3;
   c 2 oder 3; sind und
   Y wie unten angegeben definiert ist;
   - Z₄: Chlor oder Fluor;
   - Y: für Vinyl oder Ethyl, das in β-Stellung einen Substituenten enthält, der durch Alkali unter Bildung der Vinylgruppe eliminierbar ist, steht;
   - p₄, p₅ und p₆: unabhängig voneinander 0 oder 1; und
   - p₇: 0, 1 oder 2;
   bedeuten und M wie unten angegeben definiert ist;
D₃ und D₄ unabhängig voneinander eine Gruppe der allgemeinen Formeln (3a) oder (3b) 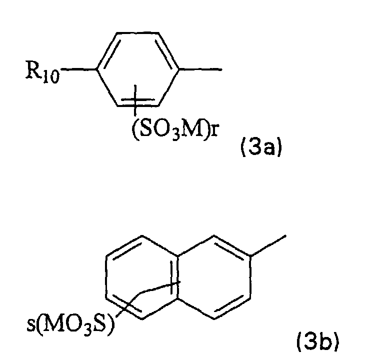 worin
   R₁₀ Wasserstoff, Methyl, Ethyl, Methoxy oder Ethoxy;
   r 1 oder 2; und
   s 1, 2 oder 3;
   bedeuten und M wie unten angegeben definiert ist;
   - Z₁: Chlor oder Fluor bedeutet;
   - X: Hydroxy, Morpholino, eine Gruppe der allgemeinen Formeln (2a), (2b) oder (2c) bedeutet oder, falls Z₁ für Chlor steht, auch für Chlor stehen kann;
   - Z₂ und Z₃: unabhängig voneinander Chlor oder Fluor bedeuten;
   - R₁: Hydroxy, Phenoxy, Morpholino oder eine Gruppe der allgemeinen Formel (2a) bedeutet und falls Z₂ für Chlor steht, auch für Chlor stehen kann;
   - R₂: eine Gruppe der allgemeinen Formeln (2a), (2b) oder (2c) bedeutet;
   - M: Wasserstoff oder ein Alkalimetall; und
   - p, p₁, p₂ und p₃: unabhängig voneinander 0 oder 1 bedeuten.

Die erfindungsgemäßen Farbstoffmischungen können lediglich einen der Farbstoffe der allgemeinen Formeln (IIa), (IIb) oder (IIc) enthalten, es können aber auch zwei oder auch alle drei enthalten sein. Darüberhinaus können jeweils auch mehrere Farbstoffe der allgemeinen Formeln (IIa), (IIb) oder (IIc) anwesend sein. In den erfindungsgemäßen Farbstoffmischungen sind der Farbstoff bzw. die Farbstoffe der allgemeinen Formel (I) bevorzugt zu 95 bis 25 Gew.-% und der Farbstoff bzw. die Farbstoffe der allgemeinen Formeln (II) bevorzugt zu 5 bis 75 Gew.-%, jeweils bezogen auf die Gesamtmenge der Farbstoffe der allgemeinen Formeln (I) und (II), enthalten. Besonders bevorzugt enthalten die erfindungsgemäßen Farbstoffmischungen den oder die Farbstoffe der allgemeinen Formel (I) zu 90 bis 50 Gew.-% und den oder die Farbstoffe der allgemeinen Formeln (II zu 10 bis 50 Gew.-%. Besonders bevorzugt sind weiterhin erfindungsgemäße Farbstoffmischungen, die den oder die Farbstoffe der allgemeinen Formel (I) zu 85 bis 55 Gew.-% und den oder die Farbstoffe der allgemeinen Formeln (II) zu 15 bis 45 Gew.-% enthalten.

Die einzelnen Formelglieder in den obengenannten und ebenso in den nachfolgend genannten allgemeinen Formeln, auch solche mit gleicher Bezeichnung innerhalb einer allgemeinen Formel, können im Rahmen ihrer Bedeutung zueinander gleiche oder voneinander verschiedene Bedeutungen besitzen.
Alkalisch eliminierbare Substituenten in β-Stellung einer für Y stehenden Ethylgruppe sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist Y β-Sulfatoethyl, β-Chlorethyl oder Vinyl und besonders bevorzugt β-Sulfatoethyl oder Vinyl.

Die Farbstoffe der allgemeinen Formeln (I) und (II) können bei gleichem Chromophor hinsichtlich der faserreaktiven Gruppen -SO₂-Y unterschiedliche Struktur besitzen. Insbesondere können die erfindungsgemäßen Farbstoffmischungen Farbstoffe gleichen Chromophors entsprechend der allgemeinen Formel (I) und Farbstoffe gleichen Chromophors entsprechend einer der allgemeinen Formeln (II) enthalten, in denen die faserreaktiven Gruppen -SO₂-Y zum einen Vinylsulfonylgruppen und zum anderen Ethyl, das in β-Stellung einen Substituenten enthält, der durch Alkali unter Bildung der Vinylgruppe eliminierbar ist, zum Beispiel β-Chlorethylsulfonyl- oder Thiosulfatoethylsulfonyl- oder bevorzugt β-Sulfatoethylsulfonyl-Gruppen, sind. Enthalten die Farbstoffgemische die jeweiligen Farbstoffkomponenten in Form eines Vinylsulfonyl-Farbstoffes, so liegt der Farbstoffanteil des jeweiligen Vinylsulfonylfarbstoffes zu dem jeweiligen β-ethylsubstituierten Farbstoff bei bis zu etwa 30 Mol-%, bezogen auf den jeweiligen Farbstoffchromophor, vor.

Hierbei sind solche erfindungsgemäßen Farbstoffmischungen bevorzugt, bei welchen der Anteil an den Vinylsulfonyl-Farbstoffen zu den β-ethylsubstituierten Farbstoffen im Molverhältnis zwischen 5:95 und 30:70 liegt. Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel -SO₃M , Carboxygruppen Gruppen entsprechend der allgemeinen Formel -COOM, Thiosulfatogruppen Gruppen entsprechend der allgemeinen Formel -S-SO₃M , Phosphatogruppen Gruppen entsprechend der allgemeinen Formel -OPO₃M₂ und Sulfatogruppen Gruppen entsprechend der allgemeinen Formel -OSO₃M, in welchen M die obengenannte Bedeutung besitzt. Für M stehendes Alkali ist insbesondere Lithium, Natrium und Kalium. Besonders bevorzugt steht M für Wasserstoff und Natrium.

Für R₉ stehendes (C₁-C₄)-Alkyl kann geradkettig oder verzweigt sein und bedeutet insbesondere Methyl, Ethyl, n-Propyl, i-Propyl, n-Butyl, i-Butyl, sek.-Butyl und tert.-Butyl.

Gruppen der allgemeinen Formeln (1a) und (1b) sind beispielsweise 3-(β-Sulfatoethylsulfonyl)-phenyl, 4-(β-Sulfatoethylsulfonyl)-phenyl, 2-Methyl-5-methoxy-4-(β-sulfatoethylsulfonyl)-phenyl, 2-Methoxy-5-(β-sulfatoethylsulfonyl)-phenyl, 2, 5-Dimethoxy-4-(β-sulfatoethylsulfonyl)-phenyl, 1-Sulfo-6-(β-sulfato-ethylsulfonyl)-naphth-2-yl, 6-Sulfo-8-(β-sulfatoethylsulfonyl)-naphth-2-yl, 8-Sulfo-6-(β-sulfatoethylsulfonyl)-naphth-2-yl sowie deren Vinylsulfonyl- und β-Thiosulfatoethylsulfonyl-Derivate, sowie 1,5-Disulfo-naphth-2-yl, 1-Sulfo-napht-2-yl, 4-Methyl-2-sulfophenyl und 2-Sulfophenyl. Bevorzugt sind 4-Methyl-2-sulfophenyl, 4-(β-Sulfatoethylsulfonyl)-phenyl, 1,5-Disulfo-naphth-2-yl, 1-Sulfo-naphth-2-yl und 1-Sulfo-6-(β-sulfato-ethylsulfonyl)-naphth-2-yl.

Gruppen der allgemeinen Formel (1c) entsprechen beispielsweise den Formeln

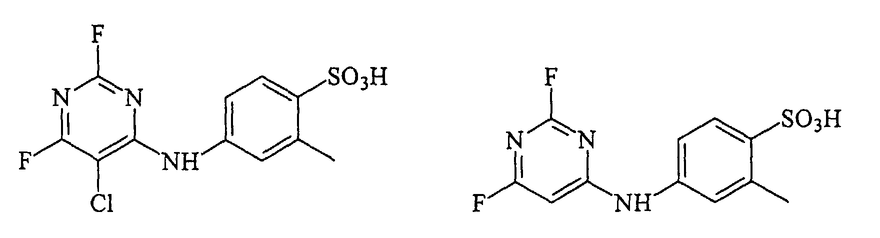

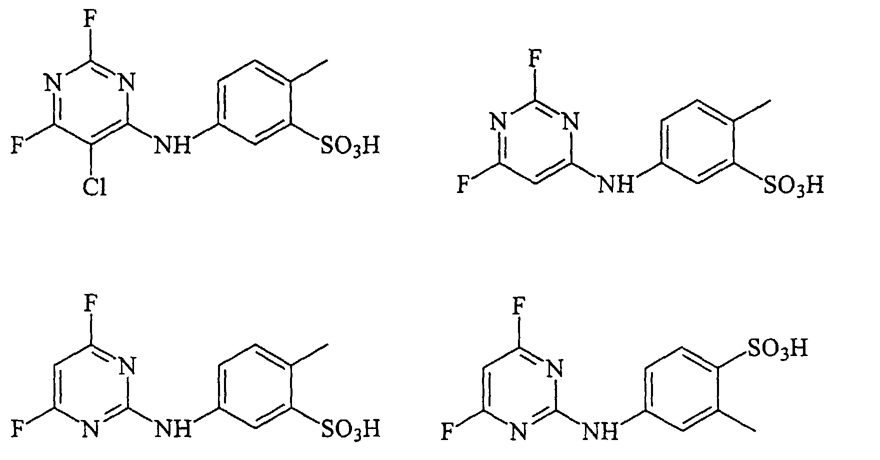

Gruppen der allgemeinen Formel (1d) entsprechen beispielsweise den Formeln

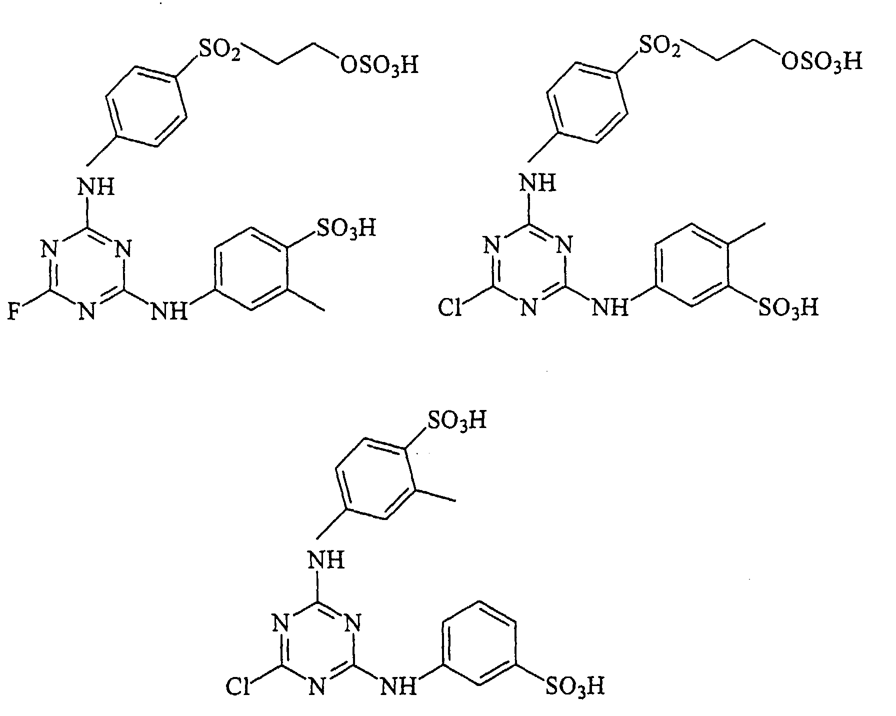

Reste der allgemeinen Formeln (2a), (2b) und (2c) sind beispielsweise γ-(β-Sulfatoethylsulfonyl)-propylamino, N-Methyl-N-[β-(β^{'}-sulfatoethylsulfonyl)-ethyl]-amino, 3-Sulfo-phenylamino, 2,5-Disulfo-phenylamino, 2-Sulfophenyl-amino, 3-(β-Sulfatoethylsulfonyl)-phenylamino, 4-(β-Sulfatoethylsulfonyl)-phenylamino, N-Methyl-anilin und N-Ethyl-anilin. In den allgemeinen Formeln (IIa), (IIb) und (IIc) ist die Gruppe -NH- bevorzugt in 3-Stellung an den 8-Hydroxy-naphthalin-Rest gebunden. In der allgemeinen Formel (IIc) ist p₂ bevorzugt die Zahl Null.

Bevorzugte Farbstoffe der allgemeinen Formel (I) sind solche der allgemeinen Formeln (Ia) und (Ib) 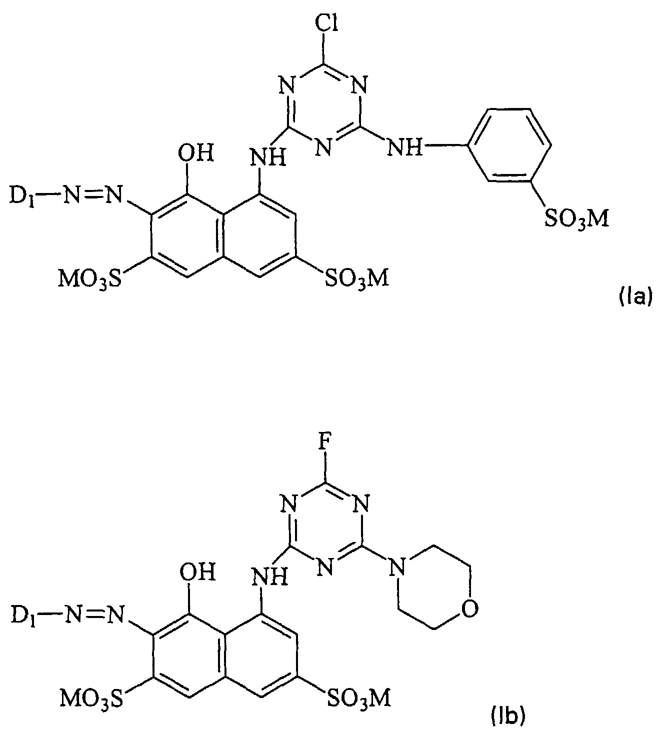 worin D₁ und M wie oben angegeben definiert sind.

Bevorzugte Farbstoffe der allgemeinen Formel (IIa) haben die Formel 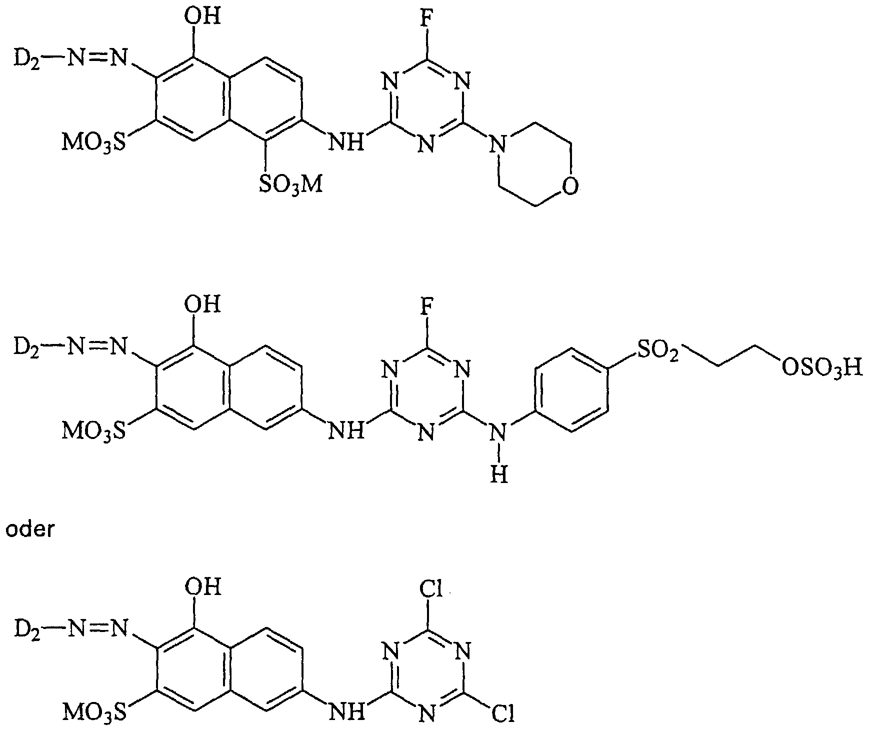 worin D₂ wie oben angegeben definiert ist.

Bevorzugte Farbstoffe der allgemeinen Formeln (IIb) und (IIc) sind solche, in denen D₃ bzw. D₄ für 2-Sulfo-4-methyl-phenyl, 2-Sulfo-4-methoxy-phenyl, 2,5-Disulfo-4-methoxy-phenyl oder 1,5-Disulfo-naphth-2-yl stehen, für den Fall, daß p₁ für die Zahl 1 steht, die Sulfogruppe in 4-Stellung an den 8-Naphthol-Rest gebunden ist, die Triazinyl- bzw. die Pyrimidinylgruppe in 2- oder 3-Stellung, insbesondere in 3-Stellung, an den 8-Naphthol-Rest gebunden ist, Z₃ für Chlor und insbesondere für Fluor steht und R₂ eine Gruppe der allgemeinen Formel (2b) ist, in welcher R₉ für Methyl und b für die Zahl 2 stehen.

Bevorzugt sind erfindungsgemäße Farbstoffmischungen, die einen oder mehrere Farbstoffe der allgemeinen Formel (I) enthalten, in welcher D₁ für eine der Gruppen der Formeln (1a) und (1b) steht sowie einen oder mehrere Farbstoffen der allgemeinen Formel (IIa), in welcher D₂ gleich 3- oder 4-(Vinylsulfonyl)-phenyl oder 3- oder 4-(β-Sulfatoethylsulfonyl)-phenyl ist, Z₂für Chlor steht und R₁Chlor oder 3-Sulfo-phenylamino bedeutet, wobei im Falle, daß sowohl Vinylsulfonyl-als auch β-Sulfatoethylsulfonyl-Gruppen in den Farbstoffmischungen vorliegen, das molare Verhältnis zwischen den Vinylsulfonyl-Anteilen und den β-Sulfatoethylsulfonyl-Anteilen zwischen 5:95 und 30:70 liegt.

Weiterhin bevorzugt sind erfindungsgemäße Farbstoffmischungen, die einen oder mehrere Farbstoffe der allgemeinen Formel (I) der oben angegebenen, insbesondere bevorzugten Bedeutung und einem oder mehreren Farbstoffen der allgemeinen Formel (IIc) enthalten, in welcher D₄ 1,5-Disulfo-naphth-2-yl oder 4-Methyl-2-sulfo-phenyl ist, p₃ für die Zahl 1 steht, wobei im Falle, daß sowohl Vinylsulfonyl- als auch β-Chlorethylsulfonyl- oder β-Sulfatoethylsulfonyl-Gruppen in den Farbstoffmischungen vorliegen, das molare Verhältnis zwischen den Vinylsulfonyl-Anteilen und den β-Chlorethylsulfonyl- oder β-Sulfatoethylsulfonyl-Anteilen zwischen 5:95 und 30:70 liegt.

Weiterhin bevorzugt sind erfindungsgemäße Farbstoffmischungen, die einen oder mehrere Farbstoffe der allgemeinen Formel (1) der obengenannten, insbesondere bevorzugten, Bedeutung und einem oder mehreren Farbstoffen der allgemeinen Formel (IIb) enthalten, in welcher der Rest D₃ gleich 2-Sulfo-4-methyl-phenyl, 2-Sulfo-4-methoxy-phenyl oder 1,5-Disulfo-naphth-2-yl ist, Z₃ für Fluor steht und R₂ für γ-(β-Sulfatoethylsulfonyl)-propylamino, N-Methyl-β-(β'-sulfatoethylsulfonyl)-ethyl-amino oder 4-(β-Sulfatoethylsulfonyl)-phenylamino ist, wobei im Falle, daß sowohl Vinylsulfonyl- als auch β-Sulfatoethylsulfonyl-Gruppen in den Farbstoffmischungen vorliegen, das molare Verhältnis zwischen den Vinylsulfonyl-Anteilen und den β-Sulfatoethylsulfonyl-Anteilen zwischen 5:95 und 30:70 liegt.

Die erfindungsgemäßen Farbstoffmischungen können noch mit einem gelben oder roten Farbstoff in Mengen von bis zu 10 Gew.-%, vorzugsweise bis zu 5 Gew.-%, nuanciert sein. Solche bekannten Farbstoffe sind beispielsweise Monoazofarbstoffe, die den allgemeinen Formeln (III), (IV), (V) und (VI) 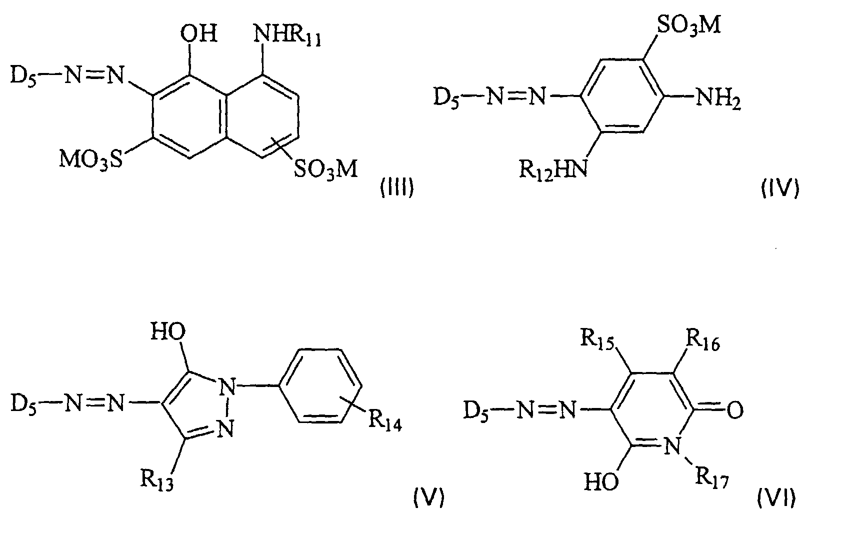 worin
- D⁵: 3-(β-Sulfatoethylsulfonyl)-phenyl, 4-(β-Sulfatoethylsulfonyl)-phenyl, 3-Vinylsulfonyl-phenyl, 4-Vinylsulfonyl-phenyl, 2-Methoxy-5-(β-sulfatoethylsulfonyl)-phenyl oder 2-Methoxy-5-vinylsulfonyl-phenyl;
- M: wie oben angegeben definiert;
- R¹¹: Acetyl, Benzoyl, 4, 6-Di-cyanamido-1,3, 5-triazin-2-yl, 4-Cyanamido-6-(sulfophenylamino)- 1,3,5-triazin-2-yl, 4-(N-Morpholino)-6-(sulfophenylamino)- 1, 3, 5-triazin-2-yl oder 4-(N-Morpholino)-6-(sulfophenylamino)-1,3,5-triazin-2-yl, das im Benzolkern durch Methyl oder Methoxy substituiert ist;
- R¹²: Acetyl, Carbamoyl, 4,6-Di-cyanamido- 1,3,5-triazin-2-yl, 4-Cyanamido-6-(sulfophenylamino)- 1,3,5-triazin-2-yl, 4-(N-Morpholino)-6-(sulfophenylamino)-1,3,5-triazin-2-yl oder 4-(N-Morpholino)-6-(sulfophenylamino)-1,3,5-triazin-2-yl, das im Benzolkern durch Methyl oder Methoxy substituiert ist;
- R¹³: Methyl oder Carboxy;
- R¹⁴: Sulfo, β-Chlorethylsulfonyl oder β-Sulfatoethylsulfonyl;
- R¹⁵: Wasserstoff oder Methyl;
- R¹⁶: Wasserstoff, Cyano, Carbamoyl, Carboxy oder Sulfomethyl; und
- R¹⁷: Methyl, Ethyl oder β-Sulfoethyl sind.

Die erfindungsgemäßen Farbstoffmischungen können als Präparation in fester oder in flüssiger (gelöster) Form vorliegen. Sie enthalten im allgemeinen die bei wasserlöslichen und insbesondere faserreaktiven Farbstoffen üblichen Elektrolytsalze, wie Natriumchlorid, Kaliumchlorid und Natriumsulfat, und können desweiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel.

Im allgemeinen liegen die Farbstoffmischungen als Farbstoffpulver mit einem Gehalt an Elektrolytsalz, das auch als Stellmittel bezeichnet wird, von 10 bis 80 Gew.-%, bezogen auf das Farbstoffpulver bzw. die Präparation, vor. Diese Farbstoffpulver können zudem die erwähnten Puffersubstanzen in einer Gesamtmenge von bis zu 5 %, bezogen auf das Farbstoffpulver, enthalten. Sofern die erfindungsgemäßen Farbstoffmischungen in wäßriger Lösung vorliegen, liegt der Gehalt der erfindungsgemäßen Mischungen in diesen wäßrigen Lösungen zwischen 0, 1 und 55 Gew.-%, in der Regel zwischen 5 und 50 Gew.-%., wobei der Elektrolytsalzgehalt in diesen wäßrigen Lösungen bevorzugt unterhalb 10 Gew.-%, bezogen auf die wäßrige Lösung beträgt. Die wäßrigen Lösungen (Flüssigpräparationen) enthalten die erwähnten Puffersubstanzen in der Regel in einer Menge von 0,1 bis 5 Gew.-%, bevorzugt von 0,3 bis 2 Gew.-%.

Die erfindungsgemäßen Farbstoffmischungen können in üblicher Weise hergestellt werden, so durch mechanisches Mischen der einzelnen Farbstoffe in den erforderlichen Anteilen oder, falls D¹ gleich D² ist, durch Synthese mittels der üblichen Diazotierungs- und Kupplungsreaktionen unter Verwendung von entsprechenden Mischungen der Diazo- und Kupplungskomponenten in einer dem Fachmann geläufigen Weise und den hierzu erforderlichen Mengenanteilen. So kann man beispielsweise in der Weise vorgehen, daß man wäßrige Lösungen von Mischungen von entsprechenden zwei Kupplungskomponenten, so einer Verbindung der allgemeinen Formel (VII) 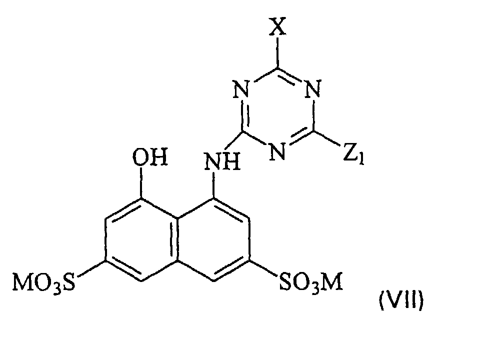 worin M, X und Z₁ wie oben angegeben definiert sind als Kupplungskomponente der Farbstoffe der allgemeinen Formel (I) und einer Verbindung allgemeinen Formel (VIII) 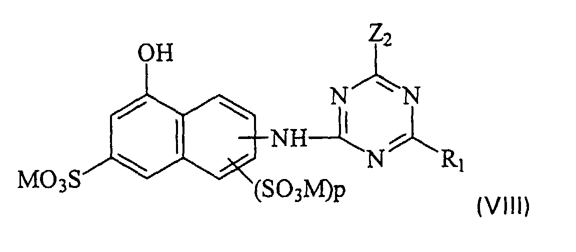 worin M, R₁, Z₂ und p wie oben angegeben definiert sind und wäßrige Lösungen oder Suspensionen der Diazokomponenten der allgemeinen Formel D₁-NH₂ gleich D₂-NH₂, wobei D ₁ bzw. D₂ wie oben angegeben definiert sind, in den entsprechenden Anteilen miteinander bei einem pH-Wert zwischen 3 und 7 umsetzt (kuppelt). Die so erhaltene Farbstoffmischung kann aus der Lösung in üblicher Weise isoliert werden, so beispielsweise durch Aussalzen mit einem Elektrolytsalz, wie Natriumchlorid, Kaliumchlorid oder Lithiumchlorid, oder durch Sprühtrocknung.

Werden die erfindungsgemäßen Farbstoffmischungen durch mechanisches Mischen der Einzelfarbstoffe hergestellt, so werden beim Mischen eventuell erforderliche Stellmittel, Entstaubungsmittel oder weitere Hilfsmittel, die in der Färbereitechnik oder in den hierzu verwendeten Farbstoffpräparationen üblich sind, zugegeben.

Farbstoffmischungen, in denen die Farbstoffchromophore beispielsweise neben einer β-Chlorethylsulfonyl- oder β-Thiosulfatoethylsulfonyl- oder β-Sulfatoethylsulfonyl-Gruppe noch Anteile mit Vinylsulfonylgruppen enthalten, können neben der oben genannten Methode durch Einsatz entsprechender Vinylsulfonyl-Ausgangsaniline auch in der Weise hergestellt werden, daß man die Farbstoffmischung, in denen Y für ein β-Chlorethyl- oder β-Thiosulfatoethyl- oder β-Sulfatoethyl-Rest stehen, mit einer nur für einen Teil dieser Gruppen erforderlichen Menge an Alkali umsetzt und hierbei einen Teil der genannten β-substituierten Ethylsulfonyl-Gruppen in die Vinylsulfonylgruppen überführt. Diese Maßnahme geschieht nach allgemein bekannten Methoden der Überführung von β-substituierten Ethylsulfonyl-Gruppen in die Vinylsulfonylgruppe.

Die erfindungsgemäßen Farbstoffmischungen aus den Farbstoffen der Formeln (I) und (II) liefern nach den in der Technik für faserreaktive Farbstoffe zahlreich beschriebenen Anwendungs- und Fixierverfahren auf hydroxy- und/oder carbonamidgruppenhaltigen Fasermaterialien orange bis scharlachfarbene Färbungen mit gutem Farbaufbau und guter Auswaschbarkeit nicht fixierter Farbstoffanteile. Darüberhinaus sind die erhaltenen Färbungen gut ätzbar und sehr gut als Kombinationsfarbstoffe in Kombinationsfärbungen mit anderen Farbstoffen geeignet.

Gegenstand der vorliegenden Erfindung ist deshalb auch die Verwendung der erfindungsgemäßen Farbstoffmischungen zum Färben (einschließlich Bedrucken und in der Kombinationsfärbung) von hydroxy- und/oder carbonamidgruppenhaltigen Fasermaterialien bzw. Verfahren zum Färben solcher Fasermaterialien unter Verwendung einer erfindungsgemäßen Farbstoffmischung, indem man diese in gelöster Form auf das Substrat appliziert und die Farbstoffe durch Einwirkung eines alkalisch wirkenden Agenz oder durch Hitze oder durch beide Maßnahmen auf der Faser fixiert.

Hydroxygruppenhaltige Materialien sind natürliche oder synthetische hydroxygruppenhaltige Materialien, wie beispielsweise Cellulosefasermaterialien, auch in Form von Papier, oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Anwendung der erfindungsgemäßen Farbstoffmischungen erfolgt nach allgemein bekannten Verfahren zum Färben und Bedrucken von Fasermaterialien gemäß den bekannten Anwendungstechniken für faserreaktive Farbstoffe. Da die Farbstoffe der erfindungsgemäßen Farbstoffmischungen zueinander ein sehr gutes Kombinationsverhalten zeigen, können die erfindungsgemäßen Farbstoffmischungen auch mit Vorteil in die Ausziehfärbeverfahren eingesetzt werden. Demgemäß erhält man mit ihnen beispielsweise auf Cellulosefasern nach den Ausziehverfahren aus langer Flotte bei Temperaturen zwischen 40 und 105°C, gegebenenfalls bei Temperaturen bis zu 130°C unter Druck, und gegebenenfalls in Gegenwart von üblichen Färbereihilfsmitteln unter Verwendung von säurebindenden Mitteln und gegebenenfalls neutralen Salzen, wie Natriumchlorid oder Natriumsulfat, Färbungen in sehr guten Farbausbeuten und mit ausgezeichnetem Farbaufbau und gleicher Nuance. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Ebenfalls erhält man nach den üblichen Druckverfahren für Cellulosefasern, die entweder einphasig durchgeführt werden können, beispielsweise durch Bedrucken mit einer Natriumbicarbonat oder ein anderes säurebindendes Mittel und das Farbmittel enthaltenden Druckpaste und durch anschließendes Dämpfen bei 100 bis 103°C, oder die zweiphasig, beispielsweise durch Bedrucken mit neutraler oder schwach saurer, das Farbmittel enthaltender Druckpaste und anschließendes Fixieren entweder durch Hindurchführen der bedruckten Ware durch ein heißes elektrolythaltiges alkalisches Bad oder durch Überklotzen mit einer alkalischen elektrolythaltigen Klotzflotte mit anschließendem Verweilen dieses behandelten Materials oder anschließendem Dämpfen oder anschließender Behandlung mit Trockenhitze, durchgeführt werden können, farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den erfindungsgemäßen Farbstoffmischungen erhaltenen Fixiergrade sehr hoch. Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat und Dinatriumhydrogenphosphat.

Durch die Behandlung der Farbstoffe der erfindungsgemäßen Farbstoffmischungen mit den säurebindenden Mitteln, gegebenenfalls unter Wärmeeinwirkung, werden die Farbstoffe chemisch an die Cellulosefaser gebunden: Insbesondere die Cellulosefärbungen zeigen nach der üblichen Nachbehandlung durch Spülen zur Entfernung von nicht fixierten Farbstoffanteilen ausgezeichnete Naßechtheiten, zumal sich nicht fixierte Farbstoffanteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Zur Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure oder Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile stehen zu Volumenteilen im Verhältnis von Kilogramm zu Liter.

### Beispiel 1

440 Teile eines elektrolythaltigen Farbstoffpulvers, das den roten Azofarbstoff der Formel (A) 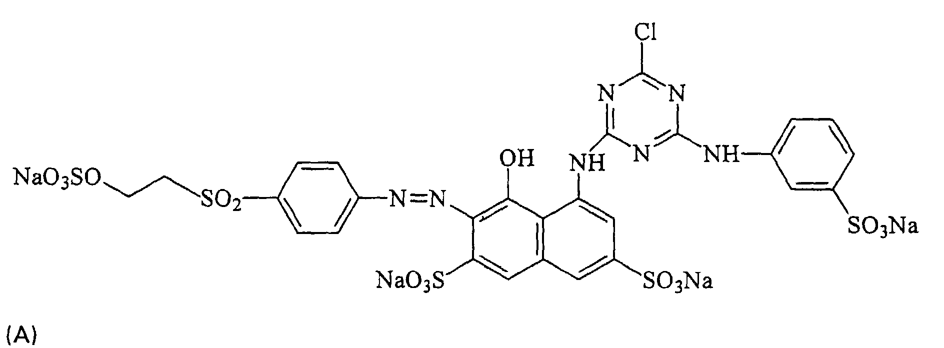 zu 68 % enthält, werden mit 72,6 Teilen eines elektrolythaltigen Farbstoff-pulvers, das den orangen Monoazofarbstoff der Formel (B) 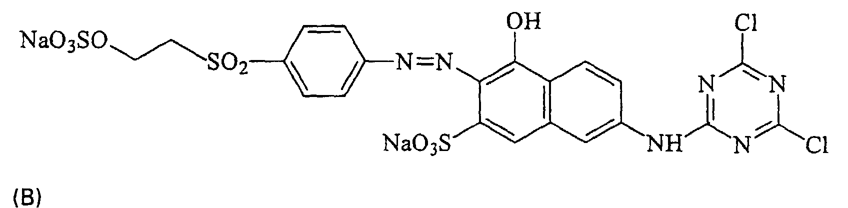 zu 50 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasern Färbungen und Drucke in tiefen orangenen Tönen.

### Beispiel 2

Zur Herstellung einer erfindungsgemäßen Farbstoffmischung stellt man eine Suspension von 288 Teilen 4-(β-Sulfatoethylsulfonyl)-anilin in 250 Teilen Wasser mit etwa 59 Teilen Natriumcarbonat auf einen pH-Wert von 4,5 bis 5 ein, diazotiert die Anilinverbindung mit 186 Volumenteilen einer 38 %igen wäßrigen Natriumnitritlösung nach Zugabe von 234 Volumenteilen einer 30 %igen wäßrigen Salzsäure und 400 Teilen Eis, gibt sodann 242 Teile 1-N-(2'-(3''-Sulfo-phenylamino)-4'-chlor-1',3',5'-triazin-6'-yl)-amino-8-hydroxy-3,6-disulfo- naphthalin, 232 Teile 6-(4,6-Dichlorotriazin-2-yl)-amino-1-hydroxy-naphthalin-3-sulfonsäure hinzu, stellt mittels Natriumcarbonat einen pH-Wert von 5 bis 6 ein und führt die Kupplungsreaktion bei 20°C und innerhalb dieses pH-Bereiches durch. Man erhält eine Farbstofflösung, in welcher die Farbstoffe der in Beispiel 1 genannten Formeln (A) und (B) im Verhältnis von 40:60 enthalten sind. Diese Farbstofflösung kann durch Zugabe von 5 Teilen eines Natriumphosphatpuffers auf einen pH-Wert von 4,5 eingestellt werden. Durch weiteres Verdünnen mit Wasser oder durch Eindampfen der Lösung kann diese flüssige Farbstoffmischung sodann auf die gewünschte Stärke für eine Flüssigpräparation eingestellt werden, die in üblicher Weise entweder direkt, gegebenenfalls nach Zusatz der entsprechenden Menge an einem alkalisch wirkenden Mittel, als Färbebad oder als Färbeflotte verwendet oder der Zubereitung eines Färbebades oder Färbeflotte zugeführt werden kann. Man erhält mit dieser Farbstoffmischung farbtiefe orange Färbungen.

### Beispiel 3

750 Teile eines elektrolythaltigen Farbstoffpulvers, das den roten Azofarbstoff der im Beispiel 1 angegebenen Formel (A) zu 68 % enthält, werden mit 250 Teilen eines elektrolythaltigen Farbstoffpulvers, das den orangen Monoazofarbstoff der Formel (C) 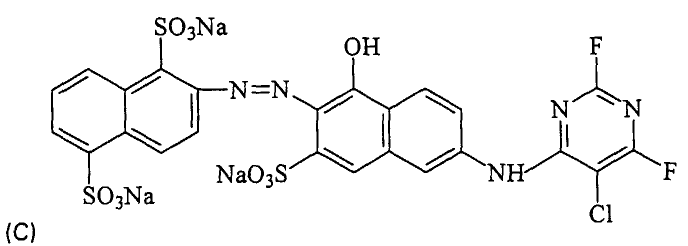 zu 56 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasermaterialien farbstarke Färbungen und Drucke in tiefen orangen Tönen.

### Beispiel 4

300 Teile eines elektrolythaltigen Farbstoffpulvers, das den roten Azofarbstoff der im Beispiel 1 angegebenen Formel (A) zu 68 % enthält, werden mit 700 Teilen eines elektrolythaltigen Farbstoffpulvers, das den orangen Monoazofarbstoff der Formel (C) zu 56 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren, beispielsweise auf Cellulosefasermaterialien farbstarke Färbungen und Drucke in tiefen scharlachfarbenen Tönen.

### Beispiel 5

152,6 Teile eines elektrolythaltigen Farbstoffpulvers, das den roten Azofarbstoff der Formel (Da) zu 39% und den roten Azofarbstoff (Db) zu 11 % enthält, 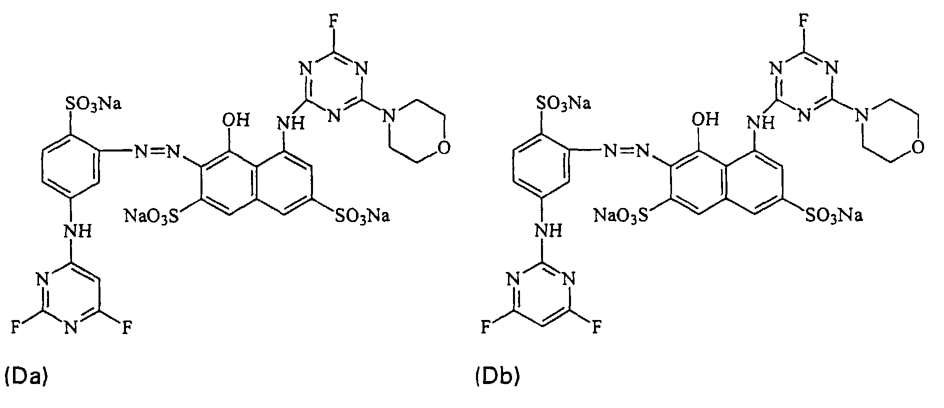 werden mit 29,0 Teilen eines elektrolythaltigen Farbstoffpulvers, das den orangen Monoazofarbstoff der im Beispiel 3 angegebenen Formel (C) zu 56 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasermaterialien Färbungen und Drucke in tiefen scharlachfarbenen Tönen.

### Beispiel 6

110 Teile eines elektrolythaltigen Farbstoffpulvers, das den roten Azofarbstoff der Formel (E) 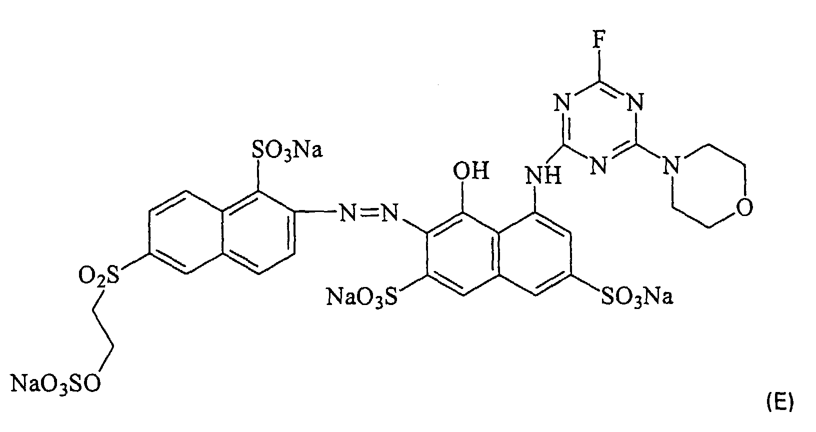 zu 50 % enthält, werden mit 21,8 Teilen eines elektrolythaltigen Farbstoffpulvers, das den orangen Monoazofarbstoff der im Beispiel 3 angegebenen Formel (C) zu 50 % enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasermaterialien, Färbungen und Drucke in tiefen orangen Tönen.

### Beispiel 7

270 Teile eines elektrolythaltigen Farbstoffpulvers, das den roten Farbstoff der Formel (F) 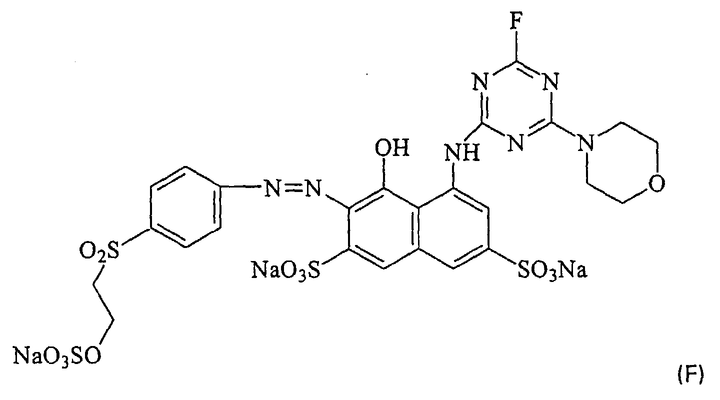 zu 50% enthält, werden mit 72,6 Teilen eines elektrolythaltigen farbstoffpulvers, das den orangen Farbstoff der Formel (G) 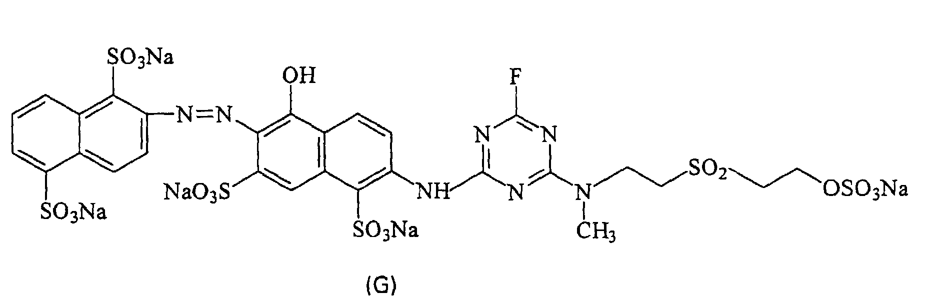 zu 50% enthält, in einem mechanischen Mischer gemischt. Die erhaltene erfindungsgemäße Farbstoffmischung ergibt nach den in der Technik für faserreaktive Farbstoffe üblichen Applikations- und Fixierverfahren beispielsweise auf Cellulosefasern Färbungen und Drucke in tiefen scharlachfarbenen Tönen.

### Beispiele 8 bis 18

In den nachfolgenden Tabellenbeispielen sind weitere erfindungsgemäße Farbstoffmischungen aus dem Farbstoff der Formel (A) und aus einem Farbstoff entsprechend der allgemeinen Formel (H) 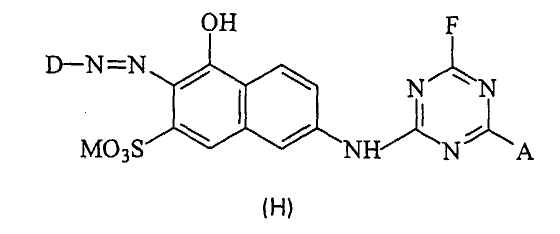 in welcher M die oben angegebene Bedeutung hat und die Reste D und A die in dem jeweiligen Tabellenbeispiel angegebenen Bedeutungen besitzen, beschrieben. Diese Farbstoffmischungen ergeben auf den in der Beschreibung genannten Fasermaterialien, wie beispielsweise Cellulosefasermaterialien, nach den in der Technik für faserreaktive Farbstoffe üblichen Applikations- und Fixierverfahren farbstarke, echte Färbungen mit dem in dem jeweiligen Tabellenbeispiel angegebenen Farbton (hier auf Baumwolle).

| Bsp. | Farbstoff der Formel (H) | | Mischungsverhältnis (A):(H) in Gew.-% | Farbton |
|---|---|---|---|---|
| | Rest D | Rest A | | |
| 8 | 1,5-Disulfo-naphth-2-yl | γ-(β'-Sulfatoethylsulfonyl)propylamino | 75 : 25 | scharlach |
| 9 | dito | dito | 50 : 50 | orange |
| 10 | dito | dito | 65 : 35 | rotorange |
| 11 | dito | N-Phenyl-N-[β-(β'-sulfatoethylsulfonyl)-ethyl]-amino | 55 : 45 | orange |
| 12 | 4-Methyl-2-sulfo-phenyl | dito | 70 : 30 | scharlach |
| 13 | dito | N-(Methyl)-N-[β-(β'-sulfatoethylsulfonyl)ethyl]-amino | 60 : 40 | orange |
| 14 | dito | dito | 75 : 25 | scharlach |
| 15 | 1,5-Disulfo-naphth-2-yl | 4-(β-Sulfatoethylsulfonyl)phenylamino | 60 : 40 | orange |
| 16 | dito | dito | 65 : 35 | scharlach |
| 17 | dito | ? | 60 : 40 | orange |
| 18 | dito | dito | 50 : 50 | orange |

### Beispiele 19 bis 29

In den nachfolgenden Tabellenbeispielen sind weitere erfindungsgemäße Farbstoffmischungen aus dem Farbstoff der Formel (A) und aus einem Farbstoff entsprechend der allgemeinen Formel (I) 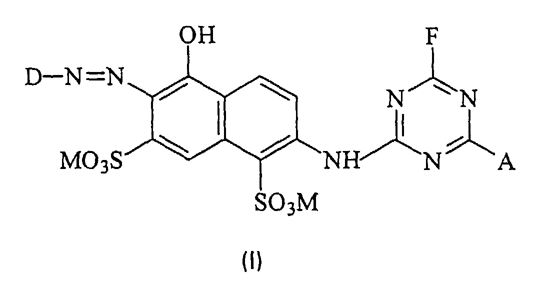 in welcher M die oben angegebene Bedeutung hat und die Reste D und A die in dem jeweiligen Tabellenbeispiel angegebenen Bedeutungen besitzen, beschrieben. Diese Farbstoffmischungen ergeben auf den in der Beschreibung genannten Fasermaterialien, wie beispielsweise Cellulosefasermaterialien, nach den in der Technik für faserreaktive Farbstoffe üblichen Applikations- und Fixierverfahren farbstarke, echte Färbungen mit dem in dem jeweiligen Tabellenbeispiel angegebenen Farbton (hier auf Baumwolle).

| Bsp. | Farbstoff der Formel (I) | | Mischungsverhältnis (A):(I) in Gew.-% | Farbton |
|---|---|---|---|---|
| | Rest D | Rest A | | |
| 19 | 1,5-Disulfo-naphth-2-yl | N-Methyl-N-(β-(β'sulfatoethylsulfon yl)-ethyl)-amino | 60 : 40 | orange |
| 20 | 4-Methyl-2-sulfophenyl | dito | 75 : 25 | scharlach |
| 21 | 4-Methoxy-2-sulfophenyl | dito | 60 : 40 | orange |
| 22 | dito | dito | 75 : 25 | scharlach |
| 23 | 1-Sulfo-6-(β-sulfatoethylsulfonyl)napth-2-yl | Morpholino | 60 : 40 | orange |
| 24 | dito | dito | 70 : 30 | scharlach |
| 25 | dito | N-Methyl-(β-(β'-sulfatoethylsulfonyl)ethyl)-amino | 60 : 40 | orange |
| 26 | dito | dito | 75 : 25 | scharlach |
| 27 | 1,5-Disulfo-naphth-2-yl | Bis-N,N-(β-vinylsulfonyl-ethyl)-amino | 65 : 35 | rotorange |
| 28 | dito | dito | 75 : 25 | scharlach |
| 29 | dito | 3-(β-sulfatoethylsulfonyl)-phenylamino | 60 : 40 | orange |

## Patentansprüche

1. Farbstoffmischung enthaltend einen oder mehrere der Farbstoffe der allgemeinen Formel (I) 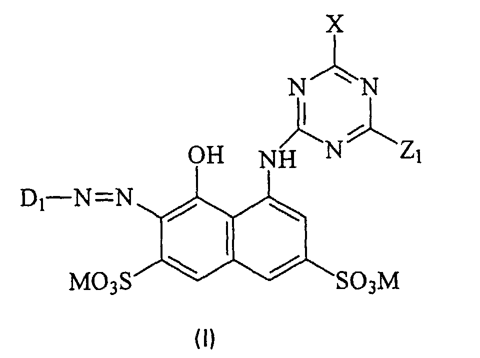 und einen oder mehrere Farbstoffe der allgemeinen Formeln (IIa), (IIb) und (IIc) 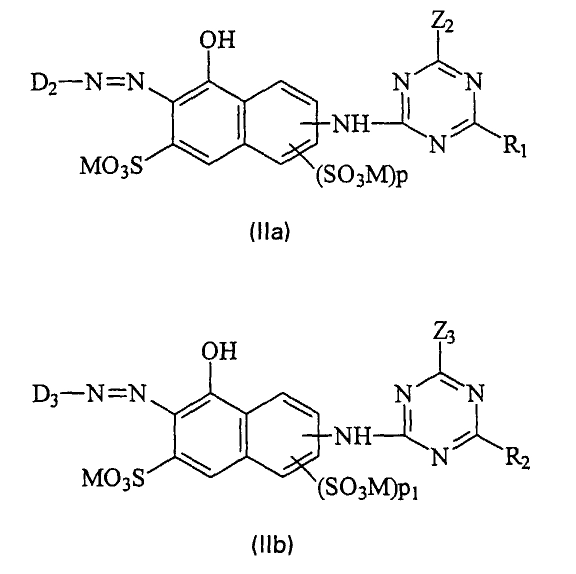 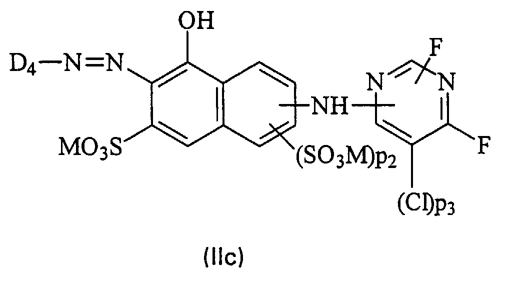 worin
D₁ und D₂ unabhängig voneinander für eine Gruppe der allgemeinen Formeln (1a), (1b), (1c) oder (1d) stehen 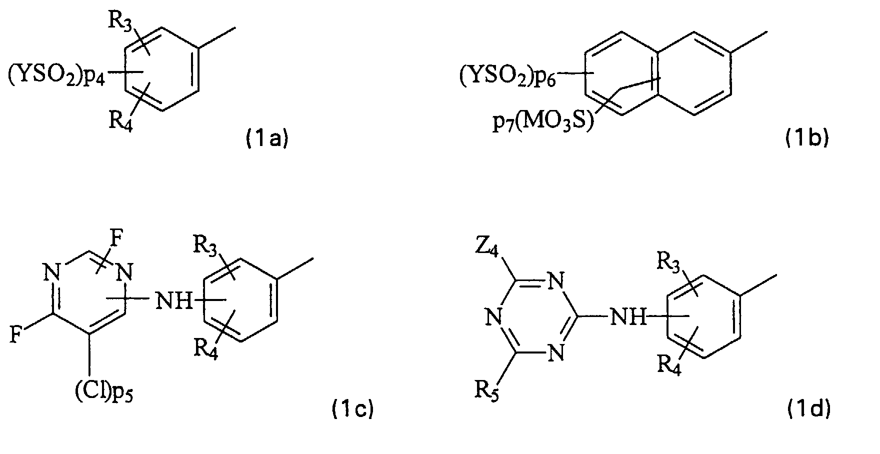 in welchen
R³ Wasserstoff, Methyl, Ethyl, Methoxy, Ethoxy, Sulfo oder Carboxy;
R⁴ Wasserstoff, Methyl, Ethyl, Methoxy, Ethoxy oder Sulfo;
R⁵ Hydroxy, Phenoxy, Morpholino, eine Gruppe der allgemeinen Formel (2a) 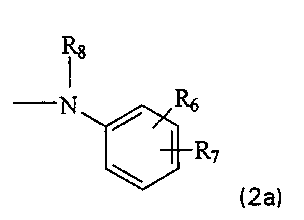 worin
R⁶ Wasserstoff, Methyl, Ethyl, Methoxy, Ethoxy, Hydroxy, Sulfo, Carboxy oder eine Gruppe -(CH₂)ₐ-SO₂-Y, worin a = 0, 1, 2 oder 3 und Y wie unten angegeben definiert ist;
R⁷ Wasserstoff, Methyl, Ethyl, Methoxy, Ethoxy oder Sulfo und
R⁸ Wasserstoff, Methyl, Ethyl oder β-Sulfoethyl sind; oder eine Gruppe der allgemeinen Formel (2b) oder (2c)
-N(R₉)-(CH₂)_{b}-SO₂-Y (2b)
-N(R₉)-(CH₂)_{b}-W-(CH₂)_{c}-SO₂-Y (2c)
worin
R₉ Wasserstoff, Phenyl, durch 1 oder 2 Substituenten aus der Reihe Methyl, Ethyl, Methoxy, Ethoxy, Sulfo oder Carboxy substituiertes Phenyl, (C₁-C₄)-Alkyl oder eine Gruppe der Formel
b 0, 1, 2 oder 3;
c 2 oder 3; sind und
Y wie unten angegeben definiert ist;
Z₄ Chlor oder Fluor;
Y für Vinyl oder Ethyl, das in β-Stellung einen Substituenten enthält, der durch Alkali unter Bildung der Vinylgruppe eliminierbar ist, steht;
p₄, p₅ und p₆ unabhängig voneinander 0 oder 1; und
p₇ 0, 1 oder 2;
bedeuten und M wie unten angegeben definiert ist;
D₃ und D₄ unabhängig voneinander eine Gruppe der allgemeinen Formeln (3a) oder (3b) 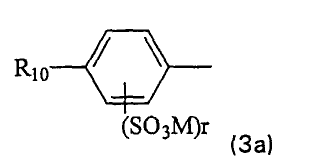 worin 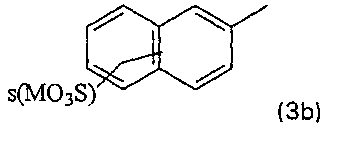
R₁₀ Wasserstoff, Methyl, Ethyl, Methoxy oder Ethoxy;
r 1 oder 2; und
s 1, 2 oder 3;
bedeuten und M wie unten angegeben definiert ist;
Z₁ Chlor oder Fluor bedeutet;
X Hydroxy, Morpholino, eine Gruppe der allgemeinen Formeln (2a), (2b) oder (2c) bedeutet oder, falls Z₁ für Chlor steht, auch für Chlor stehen kann;
Z₂ und Z₃ unabhängig voneinander Chlor oder Fluor bedeuten;
R₁ Hydroxy, Phenoxy, Morpholino oder eine Gruppe der allgemeinen Formel (2a) bedeutet und falls Z₂ für Chlor steht, auch für Chlor stehen kann;
R₂ eine Gruppe der allgemeinen Formeln (2a), (2b) oder (2c) bedeutet;
M Wasserstoff oder ein Alkalimetall; und
p, p₁, p₂ und p₃ unabhängig voneinander 0 oder 1 bedeuten.

2. Farbstoffmischung gemäß Anspruch 1, dadurch gekennzeichnet, daß der bzw. die Farbstoffe der allgemeinen Formel (I) zu 95 bis 25 Gew.-% und der Farbstoff bzw. die Farbstoffe der allgemeinen Formel (II) zu 5 bis 75 Gew.-%, jeweils bezogen auf die Gesamtmenge der Farbstoffe der allgemeinen Formeln (I) und (II), enthalten sind.

3. Farbstoffmischung gemäß Anspruch 1 und/oder 2, dadurch gekennzeichnet, daß der Farbstoff der allgemeinen Formel (I) die allgemeinen Formeln (Ia) oder (Ib) 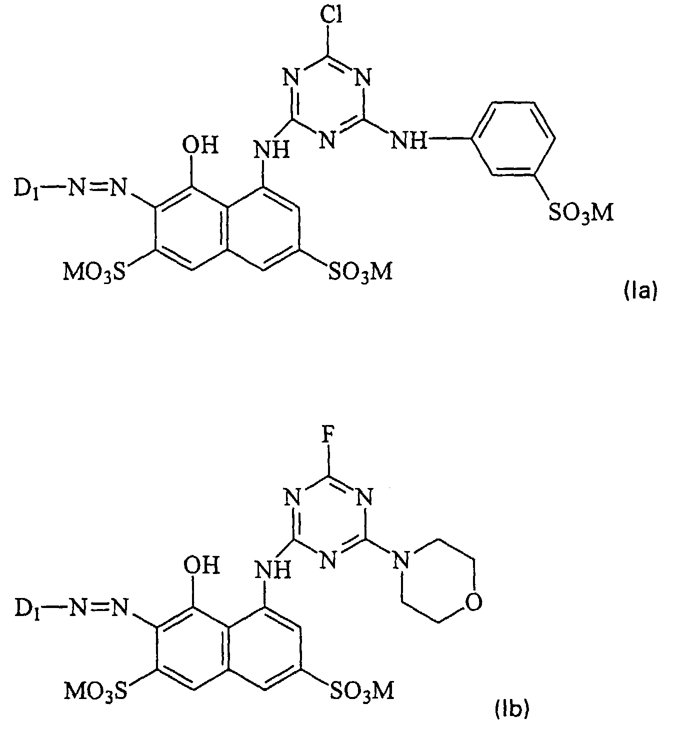 aufweist.

4. Farbstoffmischung gemäß einem oder mehreren der Ansprüche 1 bis 3, dadurch gekennzeichnet, daß D₃ bzw. D₄ für 2-Sulfo-4-methyl-phenyl, 2-Sulfo-4-methoxy-phenyl, 2,5-Disulfo-4-methoxy-phenyl oder 1,5-Disulfo-naphth-2-yl stehen, p₁ für die Zahl 1 steht und die Sulfogruppe in 4-Stellung an den 8-Naphthol-Rest gebunden ist, die Triazinyl- bzw. die Pyrimidinylgruppe in 2- oder 3-Stellung, insbesondere in 3-Stellung, an den 8-Naphthol-Rest gebunden ist, Z₃ für Chlor und insbesondere für Fluor steht und R₂ eine Gruppe der allgemeinen Formel (2b) ist, in welcher R₉ für Methyl und b für die Zahl 2 stehen.

5. Farbstoffmischung gemäß Anspruch 1 und/oder 2, dadurch gekennzeichnet, daß sie einen oder mehrere Farbstoffe der allgemeinen Formel (I), in welcher D₁ für eine der Gruppen der Formeln (1a) und (1b) steht und einen oder mehrere Farbstoffe der allgemeinen Formel (IIa), in welcher D₂ gleich 3- oder 4-(Vinylsulfonyl)-phenyl oder 3- oder 4-(β-Sulfatoethylsulfonyl)-phenyl ist, Z₂ für Chlor steht und R₁ Chlor oder 3-Sulfo-phenylamino bedeutet, enthält, wobei im Falle, daß sowohl Vinylsulfonyl- als auch β-Sulfatoethylsulfonyl-Gruppen in der Farbstoffmischung vorliegen, das molare Verhältnis zwischen den Vinylsulfonyl-Anteilen und den β-Sulfatoethyl-sulfonyl-Anteilen zwischen 5:95 und 30:70 liegt.

6. Farbstoffmischung gemäß einem oder mehreren der Ansprüche 1 bis 3, dadurch gekennzeichnet, daß sie einen oder mehrere Farbstoffe der allgemeinen Formel (IIc) enthält, in welcher D₄ 1,5-Disulfo-naphth-2-yl oder 4-Methyl-2-sulfophenyl ist, p₃ für die Zahl 1 steht, wobei im Falle, daß sowohl Vinylsulfonyl- als auch β-Chlorethylsulfonyl- oder β-Sulfatoethylsulfonyl-Gruppen in den Farbstoffmischungen vorliegen, das molare Verhältnis zwischen den Vinylsulfonyl-Anteilen und den β-Chlorethylsulfonyl- oder β-Sulfatoethylsulfonyl-Anteilen zwischen 5:95 und 30:70 liegt.

7. Farbstoffmischung gemäß einem oder mehreren der Ansprüche 1 bis 3, dadurch gekennzeichnet, daß sie einen oder mehrere Farbstoffe der allgemeinen Formel (IIb) enthält, in welcher der Rest D₃ gleich 2-Sulfo-4-methyl-phenyl, 2-Sulfo-4-methoxy-phenyl oder 1,5-Disulfo-naphth-2-yl ist, Z₃ für Fluor steht und R₂ für γ-(β-Sulfatoethylsulfonyl)-propylamino, N-Methyl-β-(β'-sulfatoethylsulfonyl)-ethyl-amino oder 4-(β-Sulfatoethylsulfonyl)-phenylamino ist, wobei im Falle, daß sowohl Vinylsulfonyl- als auch β-Sulfatoethylsulfonyl-Gruppen in den Farbstoffmischungen vorliegen, das molare Verhältnis zwischen den Vinylsulfonyl-Anteilen und den β-Sulfatoethylsulfonyl-Anteilen zwischen 5:95 und 30:70 liegt.

8. Farbstoffmischung gemäß einem oder mehreren der Ansprüche 1 bis 7, dadurch gekennzeichnet, daß sie mit einem gelben oder roten Farbstoff in Mengen von bis zu 10 Gew.-%, vorzugsweise bis zu 5 Gew.-%, nuanciert ist.

9. Verfahren zur Herstellung einer Farbstoffmischung gemäß einem oder mehreren der Ansprüche 1 bis 8, dadurch gekennzeichnet, daß man die Farbstoffe der allgemeinen Formeln (I) und (II) in den erforderlichen Anteilen mechanisch mischt oder, falls D¹ gleich D² ist, mittels der üblichen Diazotierungs- und Kupplungsreaktionen unter Verwendung von entsprechenden Mischungen der Diazo- und Kupplungskomponenten in den hierzu erforderlichen Mengenanteilen synthetisiert.

10. Verwendung einer Farbstoffmischung gemäß einem oder mehreren der Ansprüche 1 bis 8 zum Färben von hydroxy- und/oder carbonamidgruppenhaltigem Fasermaterial.
